# EUROPEAN PATENT APPLICATION

(11) **EP 4 026 631 A1**
(43) Date of publication of application: **13.07.2022**
(21) Application number: 21150546.6
(22) Date of filing: 07.01.2021
(51) Int. Cl.: B22F 3/00, B22F 5/00, H01F 1/057, H01F 7/02, H01F 13/00, H01F 41/02, H02K 7/18, H02K 15/03, F03D 9/25

(54) **APPARATUS AND METHOD FOR MANUFACTURING A MONOLITHIC PERMANENT MAGNET WITH A FOCUSED AND A PARALLEL MAGNETIC FLUX REGION**

(71) Applicant: Siemens Gamesa Renewable Energy A/S, 7330 Brande (DK)
(72) Inventor: Azar, Ziad, Sheffield, South Yorkshire S10 4ED (GB); Clark, Richard, Worrall Sheffield, S35 0AF (GB); Thougaard, Hans-Joergen, 8600 Silkeborg (DK); Urda, Adriana Cristina, 2300 Copenhagen (DK)
(74) Representative: Aspacher, Karl-Georg

(57) **Abstract**

It is described an apparatus (100) for manufacturing a permanent magnet (150), the apparatus (100) comprising:
i) a first electromagnetic device (110) that is configured to provide a first magnetic flux pattern,
ii) a second electromagnetic device (120) that is configured to provide a second magnetic flux pattern being different from the first magnetic flux pattern, and
iii) a mold (130) that is arranged between the first electromagnetic device (110) and the second electromagnetic device (120), wherein the mold (130) has a mold cavity (131) for receiving a magnetic powder (135).

The first electromagnetic device (110) and the second electromagnetic device (120) are configured so that, when the magnetic powder (135) is placed into the mold cavity (130),
a) a first region (135a) of the magnetic powder (135) is aligned as a focused magnetic flux region (151) having a first angular distribution of magnetization directions resulting in a focused alignment, and
b) a second region (135b) of the magnetic powder (135) is aligned as a parallel magnetic flux region (152) having a second angular distribution of magnetization directions resulting in a parallel alignment.

## Description

### Field of invention

The present invention relates to an apparatus for manufacturing a permanent magnet. The present invention further relates to a method of manufacturing the permanent magnet. Further, the present invention relates to the permanent magnet which is monolithic and comprises a focused magnetic flux region as well as a parallel magnetic flux region. Furthermore, the invention relates to an electromechanical transducer, in particular a generator for a wind turbine, that comprises the permanent magnet. The present invention also relates to a wind turbine that comprises the electromechanical transducer.

The present invention hence relates to the technical field of manufacturing permanent magnets for electromechanical transducers, in particular electrical generators with permanent magnets for wind turbines.

### Art Background

Permanent magnetic materials are used in a plurality of different fields of application. Probably the technically and economically most important field of applications are electromechanical transducers, i.e. electric motors and electric generators. An electric motor being equipped with at least one permanent magnet converts electric energy into mechanical energy by producing a varying magnetic field by means of windings or coils. This varying magnetic field interacts with the magnetic field of the PM resulting e.g. in a rotational movement of a rotor arrangement with respect to a stator arrangement of the electric motor. In a physically complementary manner, an electric generator converts mechanical energy into electric energy.

An electric generator is a core component of any power plant for generating electric energy. This holds true for power plants which directly capture mechanical energy, e.g. hydroelectric power installations, tidal power installations, and wind power installations also denominated wind turbines.

The efficiency of an electric generator is probably the most important factor for optimizing the production of electric energy. For a permanent magnet electric generator, it is essential that the magnetic flux produced by the permanent magnets is strong, i.e. there is a high level/magnitude of magnetic flux density. Presently, this can probably best be achieved with sintered rare earth magnets, e.g. using a NdFeB (Nd₂Fe₁₄B) material composition. However, also the spatial magnetic field distribution produced by permanent magnets has an impact on the generator efficiency.

In permanent magnet generators, the permanent magnets are normally surface mounted on the rotor, while there is an airgap between said rotor and the stator. Hereby, the magnetic field flux density in the airgap is limited by the magnetic flux density of the permanent magnets, which is determined by their working point in the magnetic circuit (area of magnet = area of the airgap into which the magnet is acting), and in turn is limited by the properties of the magnetic material.

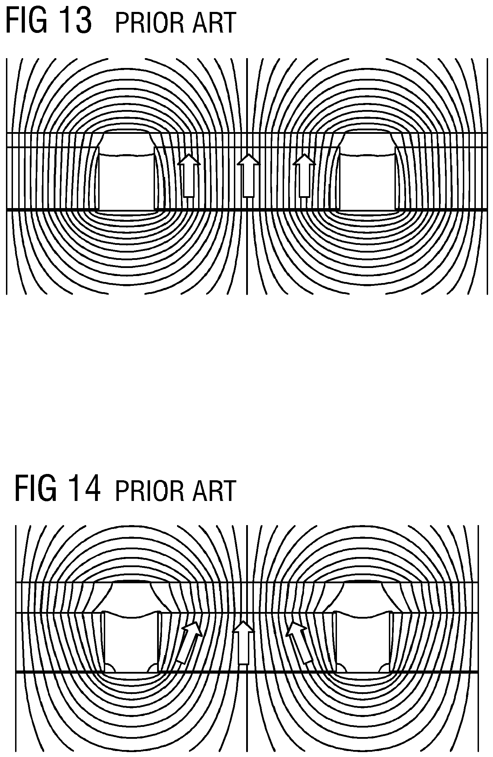

**Figure 13** shows an example of a permanent magnet from the prior art, wherein the magnet is configured so that the magnetic flux is parallel, i.e. the magnet has an angular distribution of magnetization directions that results in a parallel magnetization. It should be noticed that the term "parallel" in this document also refers to a "close to parallel" or an "nominally parallel" or an "essentially parallel" magnetization. The magnets are arranged in a multipole alternating array side-by-side (with gaps in between) on top of a rotor support structure.

**Figure 14** shows a further example of a permanent magnet from the prior art, wherein the magnet is configured during manufacture so that the magnetic flux is focused, i.e. the magnet has an angular distribution of magnetization directions that results in a focused magnetization. The magnets are arranged in a multipole alternating array side-by-side (with gaps in between) on top of a rotor support structure.

By using a focused magnetic flux magnet, the airgap flux density (in particular the fundamental component of the spatial airgap magnetic flux density distribution) can be increased, and hence the performance of the machine (in terms of torque and efficiency) can be increased, without increasing the magnet volume employed.

Although focused magnetic flux magnets can enhance overall performance through increased airgap magnetic flux density, there are challenges in their production and deployment in a representative machine environment:
i) The difference in the magnetic flux density at a focus pole and a non-focus pole can lead to an imbalance in the forces acting on the magnet surfaces, or on a magnet module in which the magnet is located, thereby reducing the net force that pulls the magnet towards the rotor support. This circumstance may complicate the mounting/retention of such an arrangement.
ii) As the magnet dimensions increase, which is required for increasing ratings/sizes of electrical machine, it may be challenging to create an essentially ideal magnetic flux focus alignment field at a sufficient level in a mold cavity to magnetically align a magnetic powder during manufacture.
iii) The optimal orientation to obtain the required focused alignment on a pole face may lead to increased leakage from the sides of the magnet, which reduces the contribution of the material in these regions to the airgap magnetic flux.

In order to overcome these issues, it may be possible to combine magnets with a focused magnetic flux and magnets with a parallel magnetic flux, depending on the desired magnetic properties and circumstances. This may be done, for example, in order to benefit from the magnetic flux focus airgap enhancement at the machine airgap, without impacting on the magnet net force and for potential use in larger magnets where manufacturing challenges maybe encountered in achieving the optimal magnetic flux focus alignment.

However, in this case, it is necessary to combine two separate magnets, i.e. one focused magnetic flux magnet and one parallel magnetic flux magnet, together.

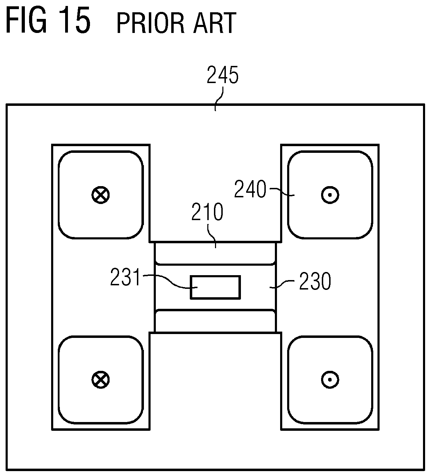

**Figure 15** shows an example of an apparatus 200 for manufacturing a permanent magnet according to the prior art: Excitation coils 240 are supplied with an excitation current, and a ferromagnetic steel yoke 245 directs the magnetic field to a mold 230, which comprises a mold cavity 231. In said mold cavity 231, magnetic powder is guided and pressed into a "green" magnet. The mold cavity 231 is arranged between two magnetic poles 210, wherein the magnetic poles 210 provide the magnetic flux with respect to the magnetic powder in the mold cavity 231. During initial magnetic powder compression in the mold cavity 231, the aligning magnetic flux is applied to align/orient the particles/grains of the magnetic powder. For a parallel magnetic flux magnet with a single uniform direction of magnetization, the mold cavity 231 is located between two parallel magnetic poles 210 as shown.

This "green" magnet may then be subject to further compression (isostatic compression) before sintering to produce a fully dense magnet, which is then subject to impulse magnetization to obtain the final permanent magnet.

EP 3 276 642 A1 describes a sintered rare earth PM having a focusing magnetic alignment pattern with an integrally formed or single piece PM body.

EP 2 762 838 A1 describes an apparatus and methods for manufacturing magnets having magnetically oriented grains. The field of a permanent magnet is shaped by applying an external field to the material from which the magnet is made in such a way as to align different regions of the material in different directions. The apparatus may include a metal-powder press that may press metal powder in the presence of a magnetic field. The press may compress the powder in an axial direction. The field may have magnetic flux lines that are transverse to the axial direction. The field may have magnetic flux lines that are along the axial direction.

However, providing two separate magnets (one with a focused magnetic flux and the other one with a parallel magnetic flux), according to the prior art, may lead to increased manufacturing complexity, because the two separate magnets require a completely different manufacturing apparatus, in terms of magnetic alignment, and have to be assembled together afterwards.

There may be a need for providing a single piece, monolithic, permanent magnet with focused and parallel magnetic flux properties in an efficient and robust manner.

### Summary of the Invention

This need may be met by the subject matter according to the independent claims. Advantageous embodiments of the present invention are described by the dependent claims.

According to a first aspect of the invention, there is described an apparatus for manufacturing a permanent magnet, in particular a single-piece, monolithic, permanent magnet, the apparatus comprising:
i) a first electromagnetic device, in particular comprising a first magnetic pole, that is configured to provide a first magnetic flux pattern, in particular a focused magnetic flux pattern,
ii) a second electromagnetic device, in particular comprising a second magnetic pole, that is configured to provide a second magnetic flux pattern being different from the first magnetic flux pattern, in particular a parallel magnetic flux pattern, and
iii) a mold that is arranged essentially between the first electromagnetic device and the second electromagnetic device, wherein the mold has a mold cavity for receiving a magnetic powder, which in particular comprises a plurality of magnetic particles.

The first electromagnetic device and the second electromagnetic device are configured so that, when the magnetic powder is placed into the mold cavity,
a) a first region of the magnetic powder is aligned as a focused magnetic flux region having a first angular distribution of magnetization directions resulting in a focused alignment, in particular allowing for a focused magnetization in a subsequent magnetization process, and
b) a second region of the magnetic powder is aligned as a parallel magnetic flux region having a second angular distribution of magnetization directions resulting in a parallel alignment, in particular allowing for a parallel magnetization in a subsequent magnetization process.

In particular, the described apparatus provides a blended magnetic flux permanent magnet that comprises a focused magnetic flux region and a parallel magnetic flux region.

According to a further aspect of the invention, there is provided a method of manufacturing a permanent magnet, in particular wherein the method is performed using the apparatus described above, wherein the method comprises:
i) placing a magnetic powder, comprising a plurality of magnetic particles, into a mold cavity of a mold,
ii) establishing a first magnetic flux pattern using a first electromagnetic device with respect to the mold cavity,
iii) establishing a second magnetic flux pattern, being different from the first magnetic flux pattern, using a second electromagnetic device with respect to the mold cavity, in particular thereby,
iv) aligning a first region of the magnetic powder as a focused magnetic flux region having a first angular distribution of magnetization directions resulting in a focused alignment, in particular allowing for a focused magnetization in a subsequent magnetization process, and
v) aligning a second region of the magnetic powder as a parallel magnetic flux region having a second angular distribution of magnetization directions resulting in a parallel alignment, in particular allowing for a parallel magnetization in a subsequent magnetization process.

According to a further aspect of the invention, there is described a monolithic permanent magnet comprising:
i) a focused magnetic flux region having a first angular distribution of magnetization directions resulting in a focused magnetization, and
ii) a parallel magnetic flux region having a second angular distribution of magnetization directions resulting in a parallel magnetization.

In particular, the focused magnetic flux region and the parallel magnetic flux region are stacked.

According to a further aspect of the invention, there is described an electromechanical transducer, in particular a generator of a wind turbine, comprising:
i) a stator arrangement, and
ii) a rotor arrangement comprising: a support structure, and
at least one monolithic permanent magnet as described above, wherein the monolithic permanent magnet is mounted to the support structure.

According to a further aspect of the invention, there is described a wind turbine for generating electrical power, the wind turbine comprising: i) a tower, ii) a wind rotor, which is arranged at a top portion of the tower and which comprises at least one blade, and iii) an electromechanical transducer as described above, wherein the electromechanical transducer is mechanically coupled with the wind rotor.

In the context of this document, the term "electromagnetic device" may refer to any device that is suitable to provide a magnetic flux (pattern) to a magnetic powder in a mold cavity. The electromagnetic device may comprise a magnetic pole, which may be made from a ferromagnetic material, in particular from iron or cobalt iron for high saturation. The electromagnetic device may further comprise an electromagnetic coil for producing at least a part of a magnetic field, and the magnetic pole may be configured for guiding and/or for shaping the magnetic field being produced by the respective electromagnetic coil.

In the context of this document, a magnet flux may be established in a continuous manner through a mold cavity from a first electromagnetic device to a second electromagnetic device. However, the first electromagnetic device may be configured to establish a focused magnetic flux pattern, while the second electromagnetic device may establish a parallel magnetic flux pattern. Because the magnetic flux is continuous, there may be an interface pattern between the focused magnetic flux pattern and the parallel magnetic flux pattern.

It should be noticed that in the context of this document, the term "parallel" does not only refer to straight linear magnetic field lines (with respect to each other), but also refers to a "nominally parallel" magnetization, an "essentially parallel" magnetization, or a "close to parallel" ("not 100% parallel") magnetization. In other words, since the magnetic flux is continuous, the parallel magnetic flux pattern and the parallel magnetic flux region may not be perfectly parallel (even though it is intended to be).

In the context of the present document, the term "first electromagnetic device" may refer in particular to a device that is suitable to provide a first magnetic flux pattern (in interaction with a second electromagnetic device), in particular a focused magnetic flux pattern, with respect to a mold cavity. For example, the first electromagnetic device may comprise a magnetic pole designed/shaped to establish a magnetic field with radially aligned magnetic flux lines through at least part of the mold cavity, such that the particles/grains of the magnetic powder are aligned towards an (approximate) focal point. In an example, the magnetic pole of the first electromagnetic device comprises a convex shape for providing a radial, focused magnetic flux pattern.

In the context of the present document, the term "second electromagnetic device" may in particular refer to any device that is suitable to provide a second magnetic flux pattern (in interaction with a first electromagnetic device), in particular a parallel magnetic flux pattern, to a mold cavity. For example, the second electromagnetic device may comprise a magnetic pole designed/shaped to establish a magnetic field with (essentially) straight magnetic flux lines through at least part of the mold cavity, such that the particles/grains of the magnetic powder are aligned in parallel and not towards a focal point. In an example, the magnetic pole of the second electromagnetic device comprises a non-concave, in particular at least essentially planar, shape for providing the desired magnetic flux pattern.

The electromagnetic devices may represent high permeability regions (relative to air and/or mold material) and the magnetic flux lines may be "incident" on the electromagnetic devices, e.g. poles, at right angles. Hence, the use of "concentric" convex and planar electromagnetic devices may establish a desired magnetic flux pattern that changes from radial (focused) to parallel. The angle tended by the magnetic field (declination) is imparted to the magnetic powder and may result in a blended parallel- and focused magnetic flux magnetization, in particular different regions, of the final magnet.

In the context of the present document, the term "mold", or mould, cast(ing) mold, may in particular refer to any element that comprises a cavity within a mold region, and which element is suitable to form a magnet within said cavity. The mold may have any shape or size that is suitable to manufacture the desired magnet. Since magnets are often manufactured by pressing magnetic powder, the mold may be configured to perform/support a powder pressing step. For example, the mold may comprise a pressing arm, e.g. a piston, that presses, e.g. punches, the powder inside the cavity, while the magnetic particles are aligned in the magnet field. The mold may comprise sidewalls around the cavity. The magnetic powder may be, at least partially, pressed to a compact structure, in particular at least compact enough to not fall apart, wherein the pressing may be sufficient to retain the alignment. This compact structure may be taken out of the mold in a further step and may then be further pressed and sintered outside the mold.

In the context of this document, the term "single piece" or "monolithic" may particularly mean that the respective magnet is integrally or monolithically formed by means of a single bulk magnetic material.

According to an exemplary embodiment, the invention is based on the idea that a single piece (monolithic) permanent magnet with focused and parallel magnetic flux properties, i.e. blended magnetic flux properties, can be provided in an efficient and robust manner, when a first region of magnetic powder is aligned as a focused magnetic flux region, and a second region of the magnetic powder is aligned as a parallel magnetic flux region, in one and the same apparatus.

Conventionally, it is necessary to manufacture a focused magnetic flux magnet in a first apparatus that is suitable to provide a focused flux alignment or magnetization, and to manufacture a parallel magnetic flux magnet in a second apparatus that is suitable to provide a parallel flux alignment or magnetization. Afterwards, these separate pieces have to be glued or bonded together.

In contrast to this cumbersome process, it has been surprisingly found by the inventors, that it is possible to manufacture a monolithic permanent magnet with blended magnetic flux properties, i.e. having a focused magnetic flux region and a parallel magnetic flux region, in one single process and by on single apparatus. In order to implement this advantageous process, the inventors have found that the magnetic powder should be aligned between a first electromagnetic device and a second electromagnetic device, wherein each electromagnetic device establishes a different magnetic flux pattern. In particular, the first electromagnetic device provides a focused magnetic flux pattern, while the second electromagnetic device provides a parallel magnetic flux pattern.

Thereby, the focused magnetic alignment is tailored to obtain an optimized permanent magnet that can provide a focused magnetic flux pole facing the main working airgap towards a stator in an electric machine (i.e. improved magnetic properties). This magnet would comprise blended magnetic flux properties and therefore, towards the opposing parallel magnetic flux pole of the magnet which faces a rotor support structure, there would be a parallel magnetic flux (i.e. improved stability).

When applying the described advantageous permanent magnets, also the torque/power performance of an electromechanical transducer, e.g. a wind turbine, can be increased.

The described manufacturing method may be applicable to many different permanent magnet shapes, e.g. rectangular, which are manufactured from particles that are aligned, e.g. using magnetic poles, in a magnetic field.

According to an embodiment, the first magnetic flux pattern is a focused magnetic flux pattern and/or the second magnetic flux is a parallel magnetic flux pattern. Thereby, a first region of the mold cavity with a focused magnetic flux pattern and a second region of the mold cavity with a parallel magnetic flux pattern can be provided in an easy, efficient, and flexible manner. The magnetic flux lines may hereby change/transit from radially aligned (in comparison to each other) lines to straight aligned (in comparison to each other) lines. Further, an interface region between the first and the second region may be located in the mold cavity.

According to a further embodiment, the first electromagnetic device is configured to provide the focused magnetic flux pattern with respect to the first region of the magnetic powder. Thereby, at least a part of the magnetic powder may be efficiently aligned in a focused manner. The first electromagnetic device may comprise a first magnetic pole that is configured/shaped so that a focused magnetic flux pattern, e.g. with radially aligned magnetic flux lines, is provided to a part of the mold cavity.

According to a further embodiment, the first electromagnetic device comprises at least partially a non-planar shape, e.g. a second magnetic pole. In particular, a shape of the group which consists of convex, semi-circular, semi-oval, semi-elliptical, trapezoidal, partially rectangular. This may provide the advantage that a very specific focused magnetic flux pattern can be provided, depending on the desired magnetic properties.

The shape of the magnetic pole may be calculated/optimized through electromagnetic design tools such as Finite Element Analysis in order to provide the required angle distribution throughout the mold. This may be especially done by tailoring the distances of the magnetic poles from the mold cavity and the shape/geometry of each magnetic pole.

According to a further embodiment, the second electromagnetic device is configured to provide the parallel magnetic flux pattern with respect to the second region of the magnetic powder. Thereby, at least a part of the magnetic powder may be efficiently aligned in a parallel manner. The second electromagnetic device may comprise a second magnetic pole that is configured/shaped so that a parallel magnetic flux pattern, e.g. with straight aligned magnetic flux lines, is provided to a part of the mold cavity.

According to a further embodiment, the second electromagnetic device comprises at least partially a non-concave shape, e.g. a second magnetic pole, with respect to the mold cavity. This may provide the advantage that a very specific parallel magnetic flux pattern can be provided, depending on the desired magnetic properties. The shape of the second magnetic pole may not be limited, however, should not comprise a concave shape.

According to a further embodiment, the second electromagnetic device comprises an at least partially planar, essentially planar, or semi-convex shape, e.g. a second magnetic pole. Also in this case, a very specific parallel magnetic flux can be provided.

In an embodiment, a planar-shaped parallel magnetic pole may not be sufficient to achieve the required deviation of the magnetic flux lines to a parallel magnetic flux orientation. In this case, a further shaping of the second magnetic pole may be required, e.g. providing a semi-convex shape, which may mean that the surface of the second magnetic pole is only slightly bended in a convex manner.

According to a further embodiment, the first region of the magnetic powder is in closer spatial proximity to the first electromagnetic device than the second region of the magnetic powder. According to a further embodiment, the second region of the magnetic powder is in closer spatial proximity to the second electromagnetic device than the first region of the magnetic powder. Thereby, the first region of the magnetic powder can be provided with a focused magnetic flux pattern and the second region of the magnetic powder can be provided with a parallel magnetic flux pattern in an easy, efficient, and flexible manner.

According to a further embodiment, the method further comprises: pressing the magnetic powder, and/or sintering the magnetic powder to obtain the permanent magnet. This may provide the advantage that the final, in particular monolithic, magnet can be manufactured using established technologies. The inventors found that the pressing and sintering processes function also for the magnet with blended magnetic flux properties.

According to a further embodiment, the method further comprises: magnetizing the aligned focused magnetic flux region to obtain a magnetized focused magnetic flux region, and/or magnetizing the aligned parallel magnetic flux region to obtain a magnetized parallel magnetic flux region.

According to a further embodiment, varying the thickness and/or width and/or shape gives the magnet designer a further degree of freedom for realizing a desired magnetic flux density profile, in particular within in the air gap between the rotor arrangement and the stator arrangement.

Using a sintered magnet material, in particular with a rare earth material composition, may provide the advantage that a strong magnetic flux density in particular within the various focal regions can be realized.

In order to avoid any misunderstanding with regard to the internal magnetization structure of the sintered magnet it is pointed out that an angular distribution of magnetization directions as described above is based on or is directly related with a preferred direction of particle, e.g. grain, orientations. This means that it is not necessary that all particles, contributing to a particular magnetic domain alignment direction or magnetization line, have to be oriented exactly in the same direction. It is rather only necessary that among a certain distribution of particle orientations there is, in particular in average, a preferred particle orientation.

According to a further embodiment, the magnetic powder comprises NdFeB, which is a highly effective magnetic material.

According to a further embodiment, the, in particular focused, magnetization directions of the angular distribution comprise, in particular essentially ideal, straight lines.

It is pointed out that the magnetic focusing of the respective focused magnetic flux magnet may not be perfect. Hence, the distribution of magnetization directions may result, at least in a cross-sectional view, in a focal volume having a certain spatial extension. In case of a perfect focusing the magnetic focal region may be, at least in a cross-sectional view, a magnetic focal point.

In this regard it is further mentioned that the described focusing may be i) a two dimensional (2D) focusing or ii) a three dimensional (3D) focusing.
i) In case of a 2D focusing the magnetization directions are distributed two-dimensionally. This means that all magnetization vectors are oriented within or parallel to a plane being defined by an x-axis and a z-axis. Thereby, the z-axis may be associated with a thickness direction of the magnet portion and the x-axis, which is perpendicular to this z-axis, may be associated with a width direction of respective magnet portion. In the "real 3D world" a theoretically perfect focusing would result in a focal line. In the field of optics, a 2D focusing is achieved e.g. by means of a cylindrical lens.
ii) In case of a 3D focusing the magnetization directions are distributed three-dimensionally. This means that there is not only a focusing along one direction, e.g. the above mentioned x-direction, but also along another direction being perpendicular thereto. Specifically, this another direction may be parallel to a y-axis which is perpendicular to both the x-axis and the above mentioned z-axis. The y-axis may define a depth direction of the respective magnetic portion. In the "real 3D world" a theoretically perfect 3D focusing would result in a focal point.

According to a further embodiment, the wind turbine is a direct drive wind turbine. This may provide the advantage that the described technology can be directly implemented into a highly efficient wind turbine, thereby further improving the energy yield. In accordance with basic principles of electrical engineering, a generator comprises a stator arrangement and a rotor arrangement. In an example of a direct drive wind turbine, the generator is realized in a so called "inner stator - outer rotor" configuration, wherein the rotor arrangement surrounds the stator arrangement. This means that permanent magnets are moved around an arrangement of a plurality of coils of the inner stator arrangement which coils produce an induced current resulting from picking up a time varying magnetic flux from the moving permanent magnets.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows an apparatus for manufacturing a permanent magnet according to an exemplary embodiment of the invention.
- Figures 2 to 6: respectively show an apparatus for manufacturing a permanent magnet according to further exemplary embodiments of the invention.
- Figure 7: shows the magnet flux lines when manufacturing a focused magnetic flux magnet of the prior art.
- Figure 8: shows the magnetic flux lines when manufacturing a blended magnetic flux magnet according to an exemplary embodiment of the invention.
- Figure 9: shows magnetic declination angles of a focused magnetic flux magnet of the prior art.
- Figure 10: shows magnetic declination angles from a blended magnetic flux magnet according to an exemplary embodiment of the invention.
- Figure 11: shows a monolithic magnet with a blended magnetic flux properties according to an exemplary embodiment of the invention.
- Figure 12: shows a monolithic magnet with blended magnetic flux properties according to a further exemplary embodiment of the invention.
- Figure 13: shows the magnetic flux lines of a multi-pole array of parallel magnetic flux magnet from the prior art.
- Figure 14: shows the magnetic flux lines of a multi-pole array of focused magnetic flux magnet from the prior art.
- Figure 15: shows an apparatus for manufacturing a magnet from the prior art.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

Before referring to the drawings in detail, exemplary embodiments of the invention are described in detail in the following.

According to an exemplary embodiment, the use of a flat surfaced, planar, second magnetic pole in close proximity to one face of a mold cavity causes the radially oriented magnetic field lines to deviate towards a parallel arrangement entering the magnetic pole at 90°. This allows the magnetic field through the mold cavity to align the magnetic powder to provide a blend of parallel magnetic flux and focused magnetic flux patterns. This pattern is then inherited by the final magnet.

According to an exemplary embodiment, the following advantages may be provided:
i) Allowing the benefits of flux focused magnets in terms of enhanced airgap flux density without the drawbacks associated with imbalance in the flux density at pole surfaces.
ii) Enabling the use of flux focused magnets in large electrical machines which use magnet modules to improve mechanical performance/manufacturing ease, whilst still benefitting from the efficiency and performance realized by using focused magnetic flux magnets.
iii) Increasing size boundaries of manufacturable flux-focused magnets.
iv) Reducing the scrap rate, i.e. improving material utilization, as the proposed magnetic alignment will reduce distortion of the magnet due to more uniform shrinkage during sintering. This requires less material to be removed when achieving the rectangular shape, in particular parallel surfaces, of the finished magnet.
v) Certain areas of the magnet will have a higher working point and are less likely to be demagnetized in service.
vi) The effective/average gap between the mold cavity and the non-focus second pole is reduced (compared to a convex/concave pole pair), requiring lower levels of excitation to achieve the required level of the magnetic field to align the magnetic powder throughout the mold cavity.
vii) The geometry is simpler to specify and/or control.

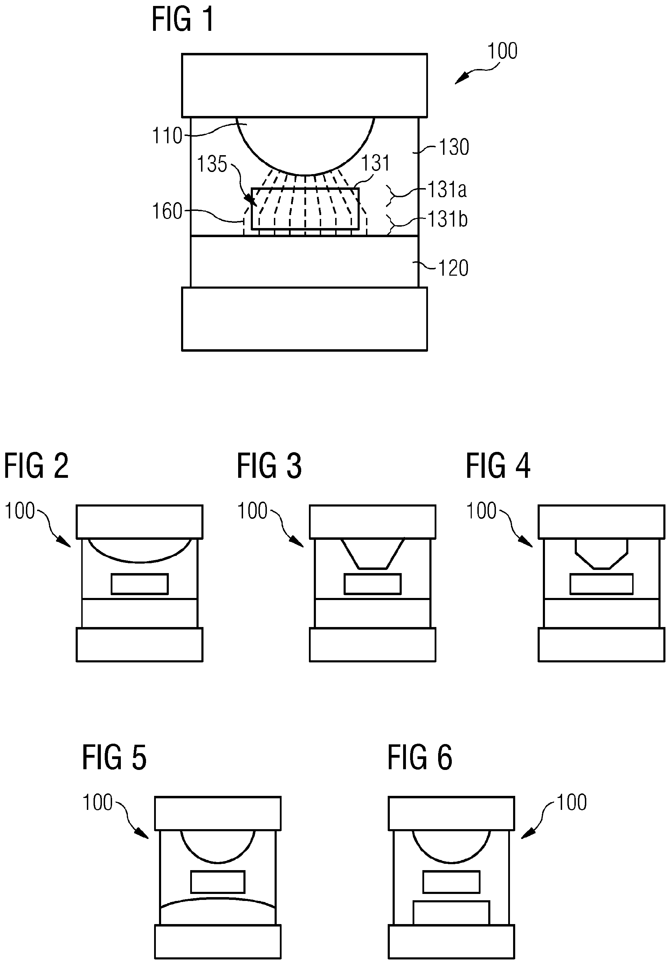

**Figure 1** shows an apparatus 100 for manufacturing a permanent magnet according to an exemplary embodiment of the invention. The apparatus 100 comprises a first electromagnetic device 110 that provides a first magnetic flux pattern and a second electromagnetic device 120 that provides a second magnetic flux pattern being different from the first magnetic flux pattern. Hereby, the magnetic flux between the first electromagnetic device 110 and the second electromagnetic device 120 is continuous. The apparatus 100 further comprises a mold 130 arranged between the first electromagnetic device 110 and the second electromagnetic device 120, wherein the mold 130 has a mold cavity 131 for receiving a magnetic powder 135. The electromagnetic devices 110, 120 comprise a first magnetic pole and a second magnetic pole, respectively.

The first magnetic pole comprises a convex shape, in other words a hemispherical shape, with respect to the mold cavity 131. In this manner, the first magnetic pole provides a focused magnetic flux pattern with radially aligned magnetic field lines towards the mold cavity 131.

The second magnetic pole comprises a non-concave, planar shape with respect to the mold cavity 131. Thereby, the second magnetic pole provides a parallel magnetic flux pattern with linear/straight aligned magnetic field lines to the mold cavity 131. In this example, the surface of the second magnetic pole is arranged closer to the mold cavity 135 than the surface of the first magnetic pole.

It can be seen in the Figure that the first magnetic flux pattern and the second magnetic flux pattern result in a blended magnetic flux, shown by (continuous) magnetic flux lines 160, which deviate, in direction from the first electromagnetic device 110 to the second electromagnetic device 120, from radial/focused to linear/parallel.

A magnetic powder 135 that comprises a plurality of magnetic particles/grains is placed into the mold cavity 131. In operation of the apparatus 100, a first region 135a of the magnetic powder is aligned/magnetized as a focused magnetic flux region having a first angular distribution of magnetization directions resulting in a focused alignment/magnetization, and a second region 135b of the magnetic powder is aligned/magnetized as a parallel magnetic flux region having a second angular distribution of alignment/magnetization directions resulting in a parallel magnetization. In between the first region 135a and the second region 135b, there can be located a "blended" interface. The described magnetic alignment can take place during pressing of the magnetic powder 135. Having oriented the powder with the preferred alignment pattern the magnet is sintered and later magnetized (e.g. via a solenoidal coil and a capacitor discharge impulse magnetizer). The magnetizing coil does not have to replicate the alignment field orientation/pattern and would typically be a plain solenoidal coil. This creates sufficient field component in the "radial"/focused component direction in order to saturate and fully magnetize all magnet regions.

**Figures 2 to 6** respectively show an apparatus 100 for manufacturing a permanent magnet 150 according to further exemplary embodiments of the invention. The apparatus 100 is in principle the same as described for Figure 1 above. In Figures 2 to 4, the shape of the first electromagnetic device (pole) 110 has been changed and in Figures 5 and 6, the shape of the second electromagnetic device (pole) 120 has been changed.

Figure 2: The first magnetic pole comprises a semi-oval or semi-elliptical shape.

Figure 3: The first magnetic pole comprises a frustoconical shape.

Figure 4: The first magnetic pole comprises a frustoconical shape that is supported by a rectangular shape.

Figure 5: The second magnetic pole comprises an essentially planar shape, semi-convex shape, wherein the surface is slightly formed convex.

Figure 6: The second magnetic pole comprises a planar shape, wherein the width of the second magnetic pole is smaller than in Figure 1. In particular, the width of the second magnetic pole is essentially equal to the width of the first magnetic pole.

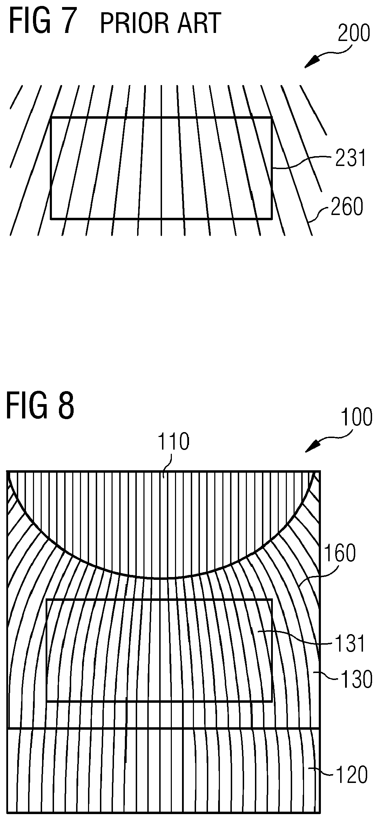

**Figures 7 and 8** compare the magnetic flux lines 160, 260, shown as equipotential field plots predicted, for
i) a manufacturing process of a focused magnetic flux magnet according to the prior art (see Figure 7), and
ii) a manufacturing process of the blended magnetic flux magnet according to an exemplary embodiment of the invention (see Figure 8).

While the magnetic flux lines 260 remain radially aligned within the mold cavity 231 in the prior art example, the magnetic flux lines 160 according to the invention deviate from a radial orientation to a straight orientation within the mold cavity 131.

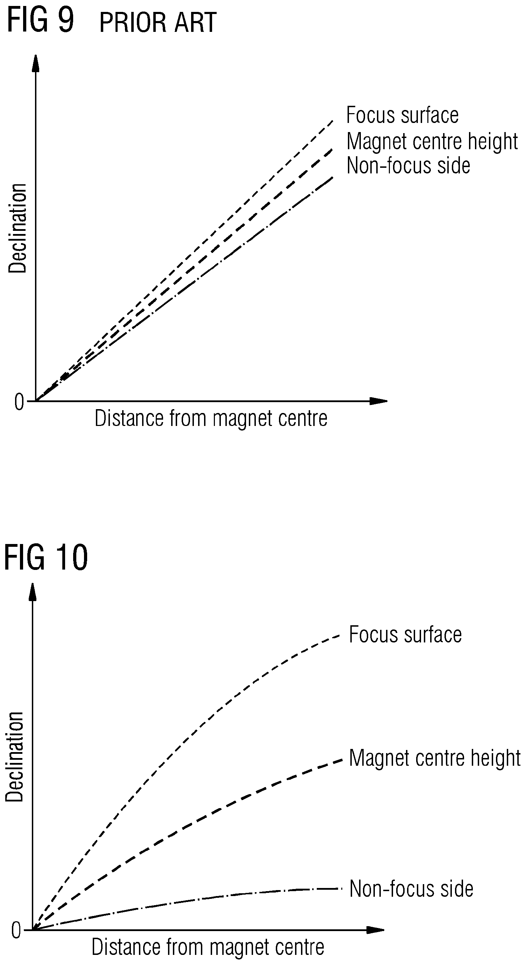

**Figures 9 and 10** compare the resulting magnet declination angles achieved in the final magnet produced by
i) a focused magnetic flux magnet from the prior art (Figure 9), and
ii) the blended magnetic flux magnet according to an embodiment of the invention.

The magnet declination angle is the localized variation in the magnet alignment from the nominal axis of the magnet. For a parallel magnet, the declination angle would be zero throughout the magnet cross section (ignoring small manufacturing tolerances).

As shown in Figure 9, for the prior art radial focused magnetic flux magnet, the angle varies from zero at the magnet center, increasing towards the magnet surface. Typical declination angles at the magnet center height may range from 15 to 25 degrees, with the spread over the height being ±5 degrees shown by the varying gradient of the curves for the focus and non-focus sides.

Conversely, the blended magnetic flux magnet shown in Figure 10 has a wider spread of angles through the magnet height (typically 20 to 30 degrees), as the angle varies from a similar level to that in the prior art at the focus surface, i.e. focused magnetic flux region 151, and tends towards zero at the non-focus side, i.e. parallel magnetic flux region 152.

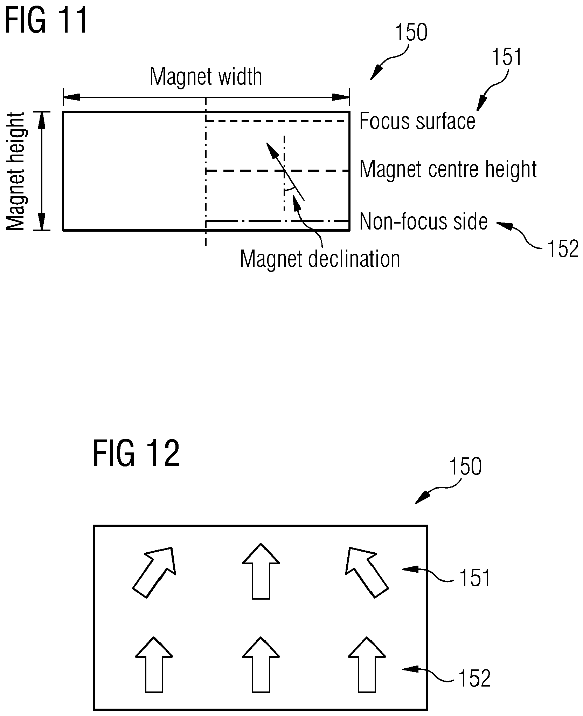

**Figures 11 and 12** show a monolithic permanent magnet 150 or blended magnetic flux magnet 110 according to exemplary embodiments of the invention.

Figure 11 illustrates the terms used in Figure 10 above. Figure 12 shows the focused magnetic flux region 151 having a first angular distribution of magnetization directions resulting in a focused magnetization, and the parallel magnetic flux region 152 having a second angular distribution of magnetization directions resulting in a parallel magnetization. In between these regions 151, 152, there may be arranged an interface region with a blended magnetic flux. In this example, the focused magnetic flux region 151 is located on top of the parallel magnetic flux region 152.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. An apparatus (100) for manufacturing a permanent magnet (150), the apparatus (100) comprising:
a first electromagnetic device (110) configured to provide a first magnetic flux pattern;
a second electromagnetic device (120) configured to provide a second magnetic flux pattern being different from the first magnetic flux pattern;
a mold (130) that is arranged between the first electromagnetic device (110) and the second electromagnetic device (120),
wherein the mold (130) has a mold cavity (131) for receiving a magnetic powder (135);
wherein the first electromagnetic device (110) and the second electromagnetic device (120) are configured so that, when the magnetic powder (135) is placed into the mold cavity (131),
a first region (135a) of the magnetic powder (135) is aligned as a focused magnetic flux region (151) having a first angular distribution of magnetization directions resulting in a focused alignment, and
a second region (135b) of the magnetic powder (135) is aligned as a parallel magnetic flux region (152) having a second angular distribution of magnetization directions resulting in a parallel alignment.

2. The apparatus (100) according to claim 1,
wherein the first magnetic flux is a focused magnetic flux pattern; and/or
wherein the second magnetic flux is a parallel magnetic flux pattern.

3. The apparatus according to claim 1 or 2,
wherein the first electromagnetic device (110) is configured to provide the focused magnetic flux pattern with respect to the first region (135a) of the magnetic powder (135).

4. The apparatus (100) according to claim 3,
wherein at least a part of the first electromagnetic device (110) comprises a non-planar shape,
in particular a shape of the group which consists of convex, semi-circular, semi-oval, semi-elliptical, semi-circular, trapezoidal, partially rectangular, chorded circular.

5. The apparatus (100) according to any of claims 1 to 4, wherein the second electromagnetic device (120) is configured to provide the parallel magnetic flux pattern with respect to the second region (135b) of the magnetic powder (135).

6. The apparatus (100) according to claim 5,
wherein the second electromagnetic device (120) comprises at least partially a non-concave shape with respect to the mold cavity (131).

7. The apparatus (100) according to claim 5 or 6,
wherein the second electromagnetic device (120) comprises at least partially a planar or semi-convex shape.

8. A method of manufacturing a permanent magnet (150),
wherein the method comprises:
placing a magnetic powder (135), comprising a plurality of magnetic particles, into a mold cavity (131) of a mold (130) ;
establishing a first magnetic flux pattern using a first electromagnetic device (110) with respect to the mold cavity (131) ;
establishing a second magnetic flux pattern, being different from the first magnetic flux pattern, using a second electromagnetic device (110) with respect to the mold cavity (131) ;
aligning a first region (135a) of the magnetic powder (135) as a focused magnetic flux region (151) having a first angular distribution of magnetization directions resulting in a focused alignment; and
aligning a second region (135b) of the magnetic powder (135) as a parallel magnetic flux region (152) having a second angular distribution of magnetization directions resulting in a parallel alignment.

9. The method as set according to claim 8,
wherein the first region (135a) of the magnetic powder (135) is in closer spatial proximity to the first electromagnetic device (110) than the second region (135b) of the magnetic powder (135); and/or
wherein the second region (135b) of the magnetic powder (135) is in closer spatial proximity to the second electromagnetic device (120) than the first region (135a) of the magnetic powder (135).

10. The method according to claim 8 or 9, wherein the method further comprises:
pressing the magnetic powder (135); and
sintering the magnetic powder (135) to obtain the permanent magnet (150).

11. The method according to any one of claims 8 to 10, wherein the method further comprises:
magnetizing the aligned focused magnetic flux region to obtain a magnetized focused magnetic flux region (151); and
magnetizing the aligned parallel magnetic flux region to obtain a magnetized parallel magnetic flux region (152).

12. A monolithic permanent magnet (150) comprising:
a focused magnetic flux region (151) having a first angular distribution of magnetization directions resulting in a focused magnetization; and
a parallel magnetic flux region (152) having a second angular distribution of magnetization directions resulting in a parallel magnetization.

13. An electromechanical transducer, in particular a generator of a wind turbine, comprising:
a stator arrangement; and
a rotor arrangement, comprising:
a support structure, and
at least one monolithic permanent magnet (150) according to claim 12, wherein the monolithic permanent magnet (150) is mounted to the support structure.

14. A wind turbine for generating electrical power, the wind turbine comprising:
a tower;
a wind rotor, which is arranged at a top portion of the tower and which comprises at least one blade; and
an electromechanical transducer as set forth in the preceding claim, wherein the electromechanical transducer is mechanically coupled with the wind rotor.

15. The wind turbine according to claim 14, wherein the wind turbine is a direct drive wind turbine.
